# EUROPEAN PATENT APPLICATION

(11) **EP 4 202 127 A1**
(43) Date of publication of application: **28.06.2023**
(21) Application number: 21315287.9
(22) Date of filing: 21.12.2021
(51) Int. Cl.: E02B 17/02, E02B 17/00

(54) **SUPPORT STRUCTURE FOR AN OFFSHORE WIND TURBINE AND PROCESS TO INSTALL SAID SUPPORT STRUCTURE**

(71) Applicant: TotalEnergies OneTech, 92400 Courbevoie (FR)
(72) Inventor: Bounhoure, François, 78290 Croissy sur Seine (FR)
(74) Representative: Croonenbroek, Thomas Jakob

(57) **Abstract**

The present invention relates to a support structure (1) for an offshore wind turbine, said support structure (1) comprising :
- a first structure part (A) destined to be fixed to the seabed (Sb), said first structure part (A) comprising at least three dummy legs (3) distributed regularly on a first circle (X1) having as center a longitudinal axis (Y) of the support structure (1) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3),
- a second structure part (B) comprising a lower extremity (Ba), attached to the upper extremity (3b) of the at least three dummy legs (3) of the first structure part (A), wherein at least one anchor device (5) of the first structure part (A) is positioned angularly between two adjacent dummy legs (3) on a second circle (X2) having as center the longitudinal axis (Y) of the support structure (1).

The present invention also relates to a process to install said support structures (1) for a wind farm installation.

## Description

### TECHNICAL FIELD:

The present invention relates to a support structure for an offshore wind turbine and the process to install such a support structure. More precisely, the present invention relates to a support structure resting and fixed on the seabed for average depths around 80 to 150m.

### BACKGROUND:

For shallower depths around 50m, it is well known to use support structures, like jacket structures, for offshore wind turbines. Such a support structure rests on the seabed and is fixed to the ground with anchor devices. The support structure extends above the sea level to receive a wind turbine mast. Generally, this support structure is made of one piece and the greater the depth is, the higher the support structure must be.

For greater depths around 80 to 150m, the support structure must be high enough to reach such depths. Such a height may be problematic for the installation of the support structure on the seabed. Indeed, the support structure is generally brought vertically on site with a transportation barge and lift by a floating crane to be placed on the seabed. For such depths, the transportation barge and the floating crane must be greater and heavier which will increase the costs and impact the planification of the installation, especially for a serial installation of several support structures for a wind farm. Furthermore, depending on which anchor devices are used, like piles drilled into the seabed, the fixation may be more complicated due to the depth.

One aim of the present invention is to provide a support structure for an offshore wind turbine adapted for average depths around 80 to 150m and an enhanced anchor device. Another aim of the present invention is also to provide an adapted process of installation of the support structures for a wind farm.

To this end, the invention relates to a Support structure for an offshore wind turbine, said support structure comprising:
- a first structure part destined to be fixed to the seabed, said first structure part comprising at least three dummy legs distributed regularly on a first circle having as center a longitudinal axis (Y) of the support structure and extending along said longitudinal axis of the support structure, said dummy legs comprising a lower extremity designed to face the seabed and an upper extremity opposed to the lower extremity, the first structure part also comprising at least three anchor devices to the. seabed linked to the at least three dummy legs,
- a second structure part comprising a lower extremity, attached to the upper extremity of the at least three dummy legs of the first structure part,
wherein at least one anchor device of the first structure part is positioned angularly between two adjacent dummy legs on a second circle having as center the longitudinal axis of the support structure.

The first structure part may comprise only one anchor device to the seabed between two adjacent dummy legs and the angle between the radius of the second circle joining an anchor device and the radii of the first circle joining the two dummy legs surrounding said anchor device, may be the same.

The first structure part may comprise at least two anchor devices to the seabed between two adjacent dummy legs and these at least two anchor devices may be distributed symmetrically on each side and/or directly on a central straight line equidistant from the two dummy legs and may pass through the longitudinal axis of the support structure.

The second circle comprising the anchor devices to the seabed of the first structure part may have a larger radius than the first circle comprising the dummy legs.

The second circle comprising the anchor devices to the seabed of the first structure part may have a smaller radius than the first circle comprising the dummy legs.

The second circle comprising the anchor devices to the seabed of the first structure part and the first circle comprising the dummy legs may have the same radius.

The anchor devices to the seabed may be sleeves configured to receive and to be fixed to piles designed to be driven or drilled into the seabed.

At least one extremity of the sleeves may comprise a guiding portion for the pile.

The anchor devices to the seabed may be suction buckets.

The upper extremity of the dummy legs of the first structure part may comprise respectively one of a receiving opening or a pin and the lower extremity of the second structure part may comprise respectively one of a pin or a receiving opening, the pin and the receiving opening may be configured to fit together.

The present invention also relates to a process to install support structures for a wind farm installation, said process comprising the following steps:
- transportation on site of at least one first structure part, said first structure part comprising at least three dummy legs distributed regularly on a first circle having as center a longitudinal axis of the support structure and extending along said longitudinal axis of the support structure, said dummy legs comprising a lower extremity designed to face the seabed and an upper extremity opposed to the lower extremity, the first structure part also comprising at least three anchor devices to the seabed linked to the at least three dummy legs, at least one anchor device to the seabed of the first structure part being positioned angularly between two adjacent dummy legs on a second circle having as center the longitudinal axis of the support structure,
- installation of the first structure parts on the seabed,
- fixing the at least one first structure part on the seabed with the anchor devices,
- transportation on site of at least one second structure upper part,
- lifting and stacking the at least one second structure part on the at least one first structure part underwater,
- fixing the at least one second structure part on the first structure parts.

The anchor devices may be sleeves and the process may comprise a preliminary step of insertion of piles into the seabed to form a reception area for each first structure parts before the step of installation of the first structure parts on the seabed, said step of installation of the first structure parts on the seabed may consist of inserting the preinstalled piles into the sleeves of the anchor devices.

A template may be dropped on the seabed in order to guide the insertion of the piles during the preliminary step of insertion of the piles, said template may be removed after the formation of the reception area for a first structure part and may be reused to form another reception area for another first structure part.

The anchor devices may be sleeves and the step of fixing of the first structure parts on the seabed may consist of:
- a first sub step of insertion of the piles through the sleeves and into the seabed, and,
- a second sub step of fixation of the sleeves onto the piles.

Further features and advantages of the invention will become apparent from the following description, given by way of non-limiting example, with reference to the appended drawings, in which:
- Figure 1 is a side view of a schematic representation of a support structure for an offshore wind turbine,
- Figure 2 is a top view of a schematic representation of a first structure part for a support structure according a first embodiment,
- Figure 3 is a top view of a schematic representation of a first structure part for a support structure according a second embodiment,
- Figure 4 is a top view of a schematic representation of a first structure part for a support structure according a third embodiment,
- Figure 5 is a top view of a schematic representation of a first structure part for a support structure according a fourth embodiment,
- Figure 6 and 7 are side views of an anchor device according to two different embodiments,
- Figure 8 is a side view of a schematic representation of the junction between a first and a second structure part,
- Figure 9 and 10 are a side views of a schematic representation of a support structure for an offshore wind turbine according to two different embodiments,
- Figure 11 and 12 are two charts of process to install support structures according to two different embodiments.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### SUMMARY OF INVENTION

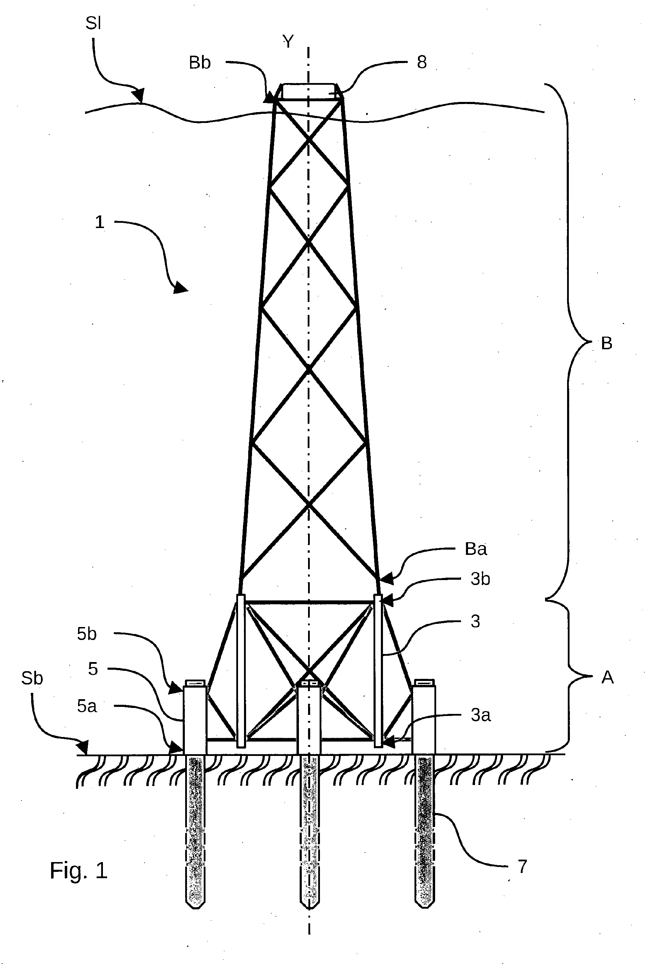

Figure 1 shows a support structure 1 for an offshore wind turbine. This support structure 1 comprises a first structure A and a second structure B designed to be stacked to form the support structure 1.

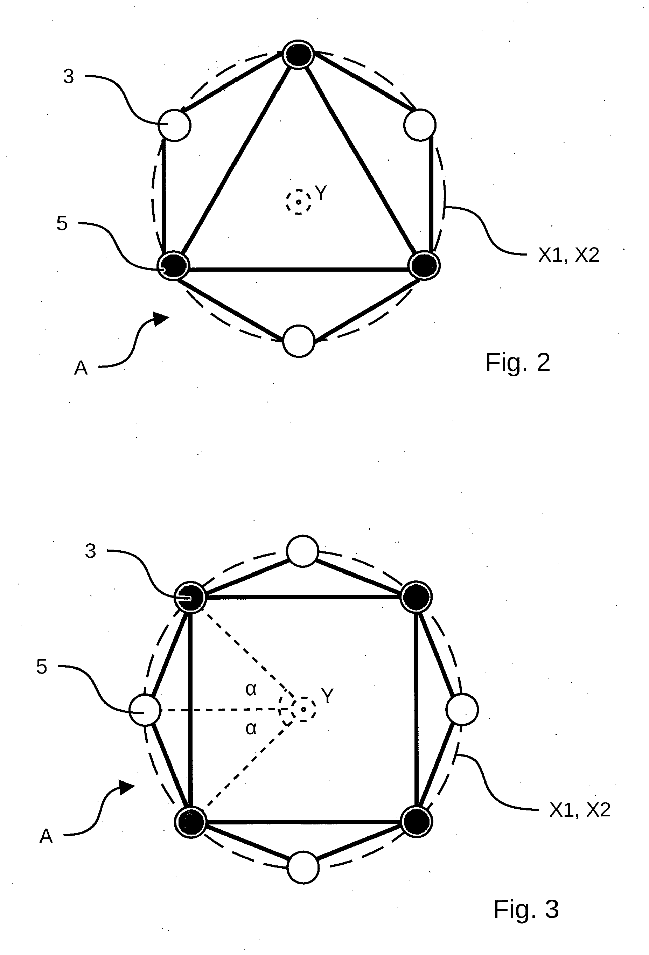

The first structure part A is configured to be fixed to the seabed Sb. The first structure part A comprises at least three dummy legs 3 distributed regularly on a first circle X1 having as center a longitudinal axis Y of the support structure 1. The dummy legs 3 are extending along said longitudinal axis Y of the support structure 1. The figure 2 shows a view from above of a first example of a first structure part A with three dummy legs 3 arranged in a triangular pattern on the first circle X1. The figure 3 shows a view from above of a second example of a first structure part A with four dummy legs 3 arranged in a square pattern on the first circle X1. Other examples with more than three or four dummy legs are also possible.

As shown in figure 1, the dummy legs 3 comprise a lower extremity 3a designed to face the seabed Sb and an upper extremity 3b opposed to the lower extremity 3a. The dummy legs 3 can be parallel to the longitudinal axis Y of the support structure 1 or they can also be inclined with respect to this longitudinal axis Y. When a dummy leg 3 is inclined, the lower extremity 3a of the dummy leg 3 is preferably more distant from the central longitudinal axis Y than its upper extremity 3b. The first circle X1 may be defined by the lower extremity 3a of the dummy legs 3 even if the dummy legs 3 are parallel to the longitudinal axis Y or inclined with respect to the longitudinal axis Y.

The first structure part A also comprises at least three anchor devices 5 to the seabed Sb linked to the at least three dummy legs 3. As illustrated in figures 2 and 3, at least one anchor device 5 of the first structure part A is positioned angularly between two adjacent dummy legs 3 that is to say within the arc defined by the radii connecting the longitudinal axis Y to the two adjacent dummy legs 3. The at least one anchor device 5 is positioned on a second circle X2 having as center the longitudinal axis Y of the support structure 1.

The fact that the anchor devices 5 are offset compared to the dummy legs 3 reduces the risks of damage on the support structure 1, especially the first structure part A when the anchor devices 5 are fixed onto the seabed Sb. This is particularly advantageous when the anchor devices 5 are fixed with piles 7 driven into the seabed Sb. Furthermore, the fact that anchor devices 5 of the first structure part A are positioned angularly between two adjacent dummy legs 3 which advantageously reduces the weight and fabrication cost of the structure compared to conventional skirt piles connections

According to a first embodiment illustrated in figures 2 and 3, the second circle X2 comprising the anchor devices 5 to the seabed Sb of the first structure part A and the first circle X1 comprising the dummy legs 3 have the same radius.

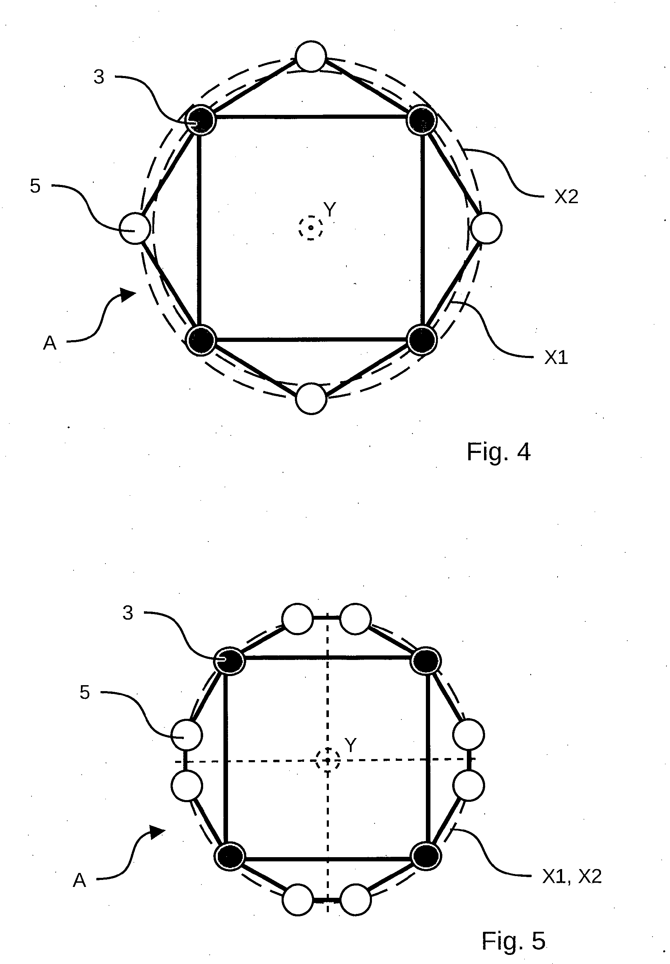

According to a second embodiment illustrated on figure 4, the second circle X2 comprising the anchor devices 5 to the seabed Sb of the first structure part A has a larger radius than the first circle X1 comprising the dummy legs 3.

According to a third embodiment not illustrated, the second circle X2 comprising the anchor devices 5 to the seabed Sb of the first structure part A has a smaller radius than the first circle X1 comprising the dummy legs 3.

In figures 2 to 4, the first structure part A comprises only one anchor device 5 to the seabed Sb between two adjacent dummy legs 3. In this particular embodiment, the angle α between the radius joining an anchor device 5 (from the axis Y) and the radii joining the two dummy legs 3 surrounding said anchor device 5 (from the axis Y), is the same, as shown in figure 3.

Another embodiment is also possible, for example illustrated in figure 5, wherein the first structure part A comprises at least two anchor devices 5 between two adjacent dummy legs 3. In the example illustrated in figure 5 only two anchor devices 5 are represented but more than two anchor devices 5 are also possible. In this embodiment, these at least two anchor devices 5 are preferably distributed symmetrically on each side and/or directly on a central straight line equidistant from the two dummy legs 3 and passing through the longitudinal axis Y of the support structure 1. The different radii of the second circle X2 compared to the radius of the first circle X1 of the first, second and third embodiments described above are also possible for this embodiment.

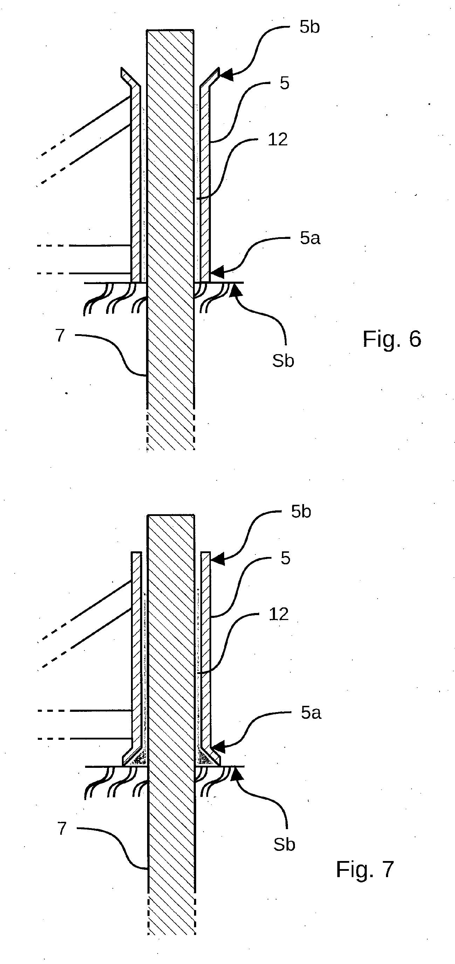

As shown in figures 6 and 7, the anchor devices 5 may be sleeves configured to receive and to be fixed to piles 7. These piles are designed to be driven or drilled into the seabed Sb. The sleeves 5 may comprise a lower extremity 5a designed to face the seabed Sb and an upper extremity 5b opposed to the lower extremity 5b. The sleeves 5 may have a hollow shape complementary to the pile 7. The pile 7 is inserted through the hollow part of the sleeve 5. The sleeve 5 and the pile 7 may be fixed together by grouting, for example by a cement grout 12 or by other means like welding or swaging by hydraulic pressure means.

The sleeve 5 may also comprise guiding portion at its upper 5b and/or lower 5a extremity in order to ease the insertion of the pile 7 depending if the pile 7 is inserted by the upper 5b or lower 5a extremity into the sleeve 5. This guiding portion may consist for example in a flared portion forming a funnel at the extremity 5a, 5b of the sleeve 5..

The anchor devices 5 may also comprise other elements like suction buckets (not illustrated) or some concrete foundation as gravity-based structure.

The first structure part A may preferably be a jacket structure consisting of a welded space frame comprising the dummy legs 3 supported by a lateral bracing system.

As shown in figure 1, the second structure part B comprises a lower extremity Ba, attached to the upper extremity 3b of the at least three dummy legs 3 of the first structure part A. The second structure part B may also preferably be a jacket structure consisting of a welded space frame comprising legs extending along the longitudinal axis Y of the support structure 1 and supported by a lateral bracing system.

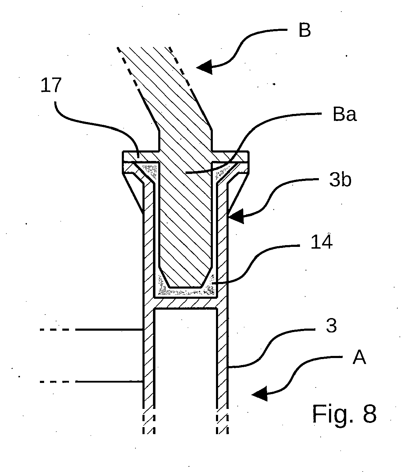

The second structure part B comprises a lower extremity Ba designed to be linked to the upper extremity 3b of the dummy legs 3 of the first structure part A. As shown in figure 8, the upper extremity 3b of the dummy legs 3 of the first structure part A comprises respectively one of a receiving opening or a pin and the lower extremity Ba of the second structure part B comprises respectively one of a pin or a receiving opening. The pin and the receiving opening are configured to fit together. The pin may be fixed into the receiving opening by grouting, for example by a cement grout 14 or by other means like welding or swaging by hydraulic pressure means. In order to ease the insertion of the pin into the receiving opening, said receiving opening may comprises a guiding portion. This guiding portion may consist in a flared portion forming a funnel at the entry of the receiving opening. The pin may also comprise a stopper element 17 coming into contact with the receiving opening in order to permit the transfer of effort between the upper extremity 3b of the dummy legs 3 and the lower extremity Ba of the second structure part B. In the example illustrated on figure 8, the receiving opening is placed on the upper extremity 3b of the dummy leg 3 and the pin is placed on the lower extremity Ba of the second structure Part B.

The upper extremity Bb of the second structure part B is configured to be placed above the sea level SI and may also comprises a platform 8 in order to receive a mast of an offshore turbine.

The section dimension of the upper extremity Bb of the second structure part B may also be.smaller surface than the section dimension of the lower extremity Ba. Thus, the legs of the second structure part B may be inclined compared to the longitudinal axis Y of the support structure 1.

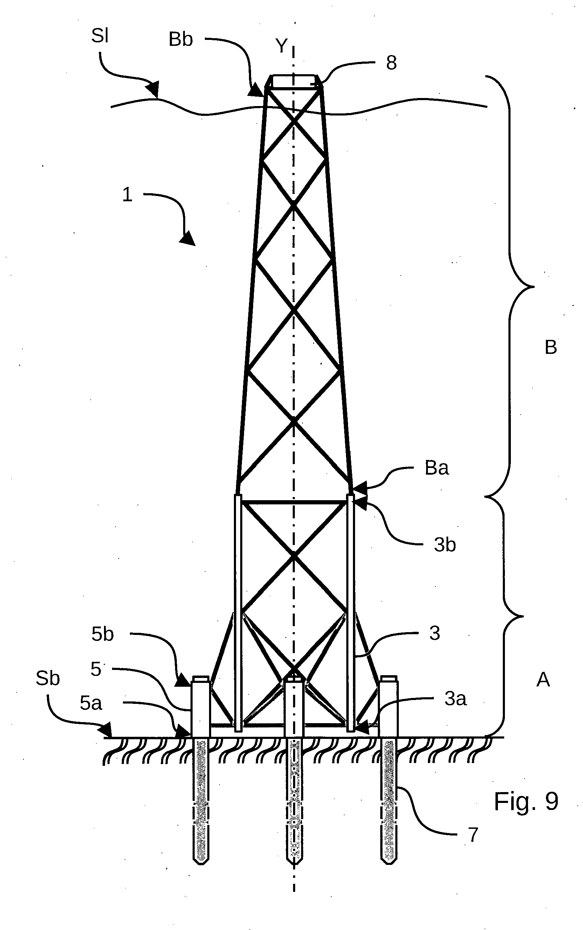

The support structure 1 is configured to be placed in locations with a depth of 80 to 150m. As an example, for a depth around 100m, the first structure part A may have a height comprised between 30 and 40m and the second structure part B may have a height comprised between 60 and 70m. For greater depths, the first structure may be higher as shown in figure 9.

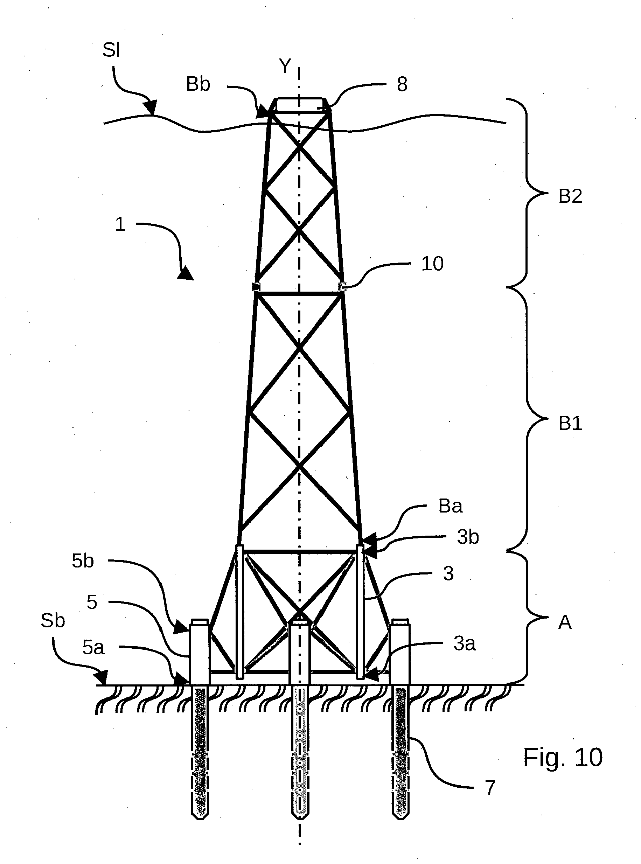

As shown in figures 1 and 9, the second structure part B may be in one piece, for example for a second structure part B between 60 to 70m. For higher second structure part B, the second structure part B may be divided in two sub-structures B1, B2 as shown in figure 10. The two sub-structures B1 and B2 may be stacked and linked together during the installation of the support structure 1. These two sub-structures B1 and B2 may be attached together by means 10 similar with the means connecting the first A and second B structure parts. This division of the second structure part B is especially advantageous for the transportation and the storage of the second structure parts B and also for the installation. Indeed, as the sub-structures B1 and B2 are lower and less heavy, their transport could be made by a smaller transportation barge and their installation could be made by a smaller floating crane.

In order to ease the manufacturing process of the support structure 1, the second structure part B, which is the higher and the more complex, may be standardized and have a constant height. This allows an automatization and standardization of the manufacturing of the second structure parts B and allow the use of robotic means for their fabrication. It is thus possible to mass produce the second structure parts B and store them so that they are available for various fields around the world or regionally. The first structure parts A which are less high and simpler may be easily adjusted to fit to the depth of the location where the support structure 1 is installed. The first structure parts A may be manufactured more locally for example by local workers, in the country near the support structure 1 location, and may be adapted to the local specifications and depths.

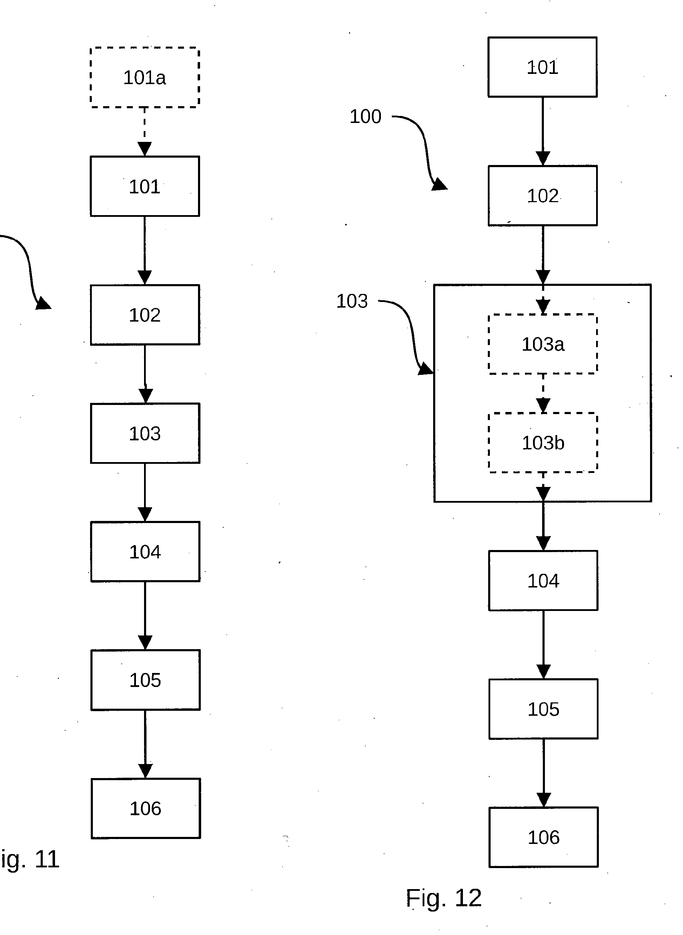

The present invention also refers to a process 100 to install support structures 1 for a wind farm installation as described above. The steps of such process are represented in figure 11.

This process comprises a first step 101 of transportation on site of one or several first structure parts A. As describe above, the first structure parts A comprises at least three dummy legs 3 distributed regularly on a first circle X1 having as center a longitudinal axis Y of the support structure Y and extending along said longitudinal axis Y of the support structure 1. The dummy legs 3 comprise a lower extremity 3a designed to face the seabed Sb and an upper extremity 3b opposed to the lower extremity 3a. The first structure part A also comprising at least three anchor devices 5 linked to the at least three dummy legs 3. At least one anchor device 5 of the first structure part A is positioned angularly between two adjacent dummy legs 3, that is to say within the arc defined by the radii connecting the longitudinal axis Y to the two adjacent dummy legs 3. The at least one anchor device 5 is also positioned on a second circle X2 having as center the longitudinal axis Y of the support structure A. As mentioned before, the first structure parts A could be brought on site by a transportation barge. As the first structure parts A are smaller and lighter, several first structure parts A could be placed on the same transportation barge and they could be placed vertically to ease the next step of installation.

A second step 102 is a step of installation of the first structure parts A on the seabed Sb. This second step 102 could be performed with a floating crane. As the first structure parts A are smaller and lighter the floating crane could be smaller in order to limit and reduce costs.

A third step 103 is a step of fixation of the first structure parts A on the seabed Sb with the anchor devices 5. Depending on the anchor devices 5, this third step 103 could be performed differently, for example with piles 7 driven or drilled into the seabed, by suction buckets or with some concrete foundation as gravity-based structure. However, due to the fact that the anchor devices 5 are offset compared to the dummy legs 3, the risks of damage on the support structure 1 are reduced. This is particularly advantageous when the anchor devices 5 are fixed with piles 7 driven into the seabed Sb.

These three steps 101, 102 and 103 may be performed during a same campaign of installation of the first structure parts A. The other following steps of installation of the second structure parts B may be performed later during another campaign of installation directly following the first campaign or delayed.

A fourth step 104 is a step of transportation on site of one or several second structure upper parts B. As mentioned before, the second structure parts B could be brought on site by transportation barge. As the second structure parts B are smaller and lighter compared to the support structure 1 as a whole, several second structure parts B could be placed on the same transportation barge and they could be placed vertically to facilitate the next step of installation.

A fifth step 105 is a step of lifting and stacking the second structure parts B on the first structure parts A underwater. This fifth step 105 could be performed with a floating crane. As the second structure parts B are smaller and lighter compared to the support structure 1 as a whole, the floating crane could be smaller in order to limit costs.

A sixth step 106 is a step of fixation of the second structure parts B on the first structure parts A. as mentioned before, this fixation could be performed by different means like grouting, welding or swaging by hydraulic pressure means.

This process 100 permits to reduce costs of the installation but also permits the installation itself with conventional transportation barges or vessels optionally equipped with standard cranes, slings and winches, and optionally with the assistance of distinct floating cranes. Indeed, the support structure 1 in two parts A and B permits to install bigger support structure 1 with much smaller transportation barges and floating cranes than for a support structure in one piece. In addition, depending on the loading capacity of the considered transportation barge or vessel, it may be possible to stack a plurality of parts A and/or a plurality of parts B in view of on-site transportation and installation provided the total height of the stack of parts A and/or B does not prevent the crane to lift, separate and set-up each individual part A and/or B. This process is particularly useful for installation of support structures 1 in water depths which were not easily accessible using traditional means until now.

If the anchor devices 5 are sleeves, the process 100 may comprises a preliminary step 101a of insertion of piles 7 into the seabed Sb to form a reception area for each first structure parts A before the step 101 of installation of the first structure parts A on the seabed Sb. In this case, the step 101 of installation of the first structure parts A on the seabed Sb consists of docking the preinstalled piles 7 into the sleeves of the anchor devices 5.

A template could be dropped on the seabed Sb in order to guide the insertion of the piles (7) during the preliminary step 101a of insertion of the piles 7. This template could be removed after the formation of the reception area for a first structure part A and reused to form another reception area for another first structure part A.

In another embodiment, shown in figure 12, wherein the anchor devices 5 are also sleeves, the piles 7 are not placed before the installation of the first structure part A but after. Thus, the step 103 of fixing the first structure parts A on the seabed Sb consists of a first sub step 103a of insertion of the piles 7 through the sleeves 5 and into the seabed Sb. In a second sub step 103b, the sleeves 5 and the piles 7 are fixed together. In this embodiment, the first structure part A is used as a template for the piles 7.

## Claims

1. Support structure (1) for an offshore wind turbine, said support structure (1) comprising:
- a first structure part (A) destined to be fixed to the seabed (Sb), said first structure part (A) comprising at least three dummy legs (3) distributed regularly on a first circle (X1) having as center a longitudinal axis (Y) of the support structure (1) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3),
- a second structure part (B) comprising a lower extremity (Ba), attached to the upper extremity (3b) of the at least three dummy legs (3) of the first structure part (A),
wherein at least one anchor device (5) of the first structure part (A) is positioned angularly between two adjacent dummy legs (3) on a second circle (X2) having as center the longitudinal axis (Y) of the support structure (1).

2. Support structure (1) according to claim 1, wherein the first structure part (A) comprises only one anchor device (5) to the seabed (Sb) between two adjacent dummy legs (3) and wherein the angle (α) between the radius of the second circle (X2) joining an anchor device (5) and the radii of the first circle (X1) joining the two dummy legs (3) surrounding said anchor device (5), is the same.

3. Support structure (1) according to claim 1, wherein the first structure part (A) comprises at least two anchor devices (5) to the seabed (Sb) between two adjacent dummy legs (3) and wherein these at least two anchor devices (5) are distributed symmetrically on each side and/or directly on a central straight line equidistant from the two dummy legs (3) and passing through the longitudinal axis (Y) of the support structure (1).

4. Support structure (1) according to any of claims 1 to 3, wherein the second circle (X2) comprising the anchor devices (5) to the seabed (Sb) of the first structure part (A) has a larger radius than the first circle (X1) comprising the dummy legs (3).

5. Support structure (1) according to any of claims 1 to 3, wherein the second circle (X2) comprising the anchor devices (5) to the seabed (Sb) of the first structure part (A) has a smaller radius than the first circle (X1) comprising the dummy legs (3).

6. Support structure (1) according to any of claims 1 to 3, wherein the second circle (X2) comprising the anchor devices (5) to the seabed (Sb) of the first structure part (A) and the first circle (X1) comprising the dummy legs (3) have the same radius.

7. Support structure (1) according to any of claims 1 to 6, wherein the anchor devices (5) to the seabed (Sb) are sleeves configured to receive and to be fixed to piles (7) designed to be driven or drilled into the seabed.

8. Support structure (1) according to claim 7, wherein at least one extremity (5a, 5b) of the sleeves comprises a guiding portion for the pile (7).

9. Support structure (1) according to any of claims 1 to 6, wherein the anchor devices (5) to the seabed (Sb) are suction buckets.

10. Support structure (1) according to any of claims 1 to 9, wherein the upper extremity (3b) of the dummy legs (3) of the first structure part (A) comprises respectively one of a receiving opening or a pin and the lower extremity (Ba) of the second structure part (B) comprises respectively one of a pin or a receiving opening, wherein the pin and the receiving opening are configured to fit together.

11. Process to install support structures (1) for a wind farm installation, said process comprising the following steps:
- transportation on site of at least one first structure part (A), said first structure part (A) comprising at least three dummy legs (3) distributed regularly on a first circle (X1) having as center a longitudinal axis (Y) of the support structure (Y) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3), at least one anchor device (5) to the seabed (Sb) of the first structure part (A) being positioned angularly between two adjacent dummy legs (3) on a second circle (X2) having as center the longitudinal axis (Y) of the support structure (A),
- installation of the first structure parts (A) on the seabed (Sb),
- fixing the at least one first structure part (A) on the seabed (Sb) with the anchor devices (5),
- transportation on site of at least one second structure upper part (B),
- lifting and stacking the at least one second structure part (B) on the at least one first structure part (A) underwater,
- fixing the at least one second structure part (B) on the first structure parts (A).

12. Process according to claim 11, wherein the anchor devices (5) are sleeves and wherein the process comprises a preliminary step of insertion of piles (7) into the seabed (Sb) to form a reception area for each first structure parts (A) before the step of installation of the first structure parts (A) on the seabed (Sb), said step of installation of the first structure parts (A) on the seabed (Sb) consisting of inserting the preinstalled piles (7) into the sleeves of the anchor devices (5).

13. Process according to claim 12, wherein a template is dropped on the seabed (Sb) in order to guide the insertion of the piles (7) during the preliminary step of insertion of the piles (7), said template being removed after the formation of the reception area for a first structure part (A) and reused to form another reception area for another first structure part (A).

14. Process according to claim 11, wherein the anchor devices (5) are sleeves and wherein the step of fixing of the first structure parts (A) on the seabed (Sb) consists of:
- a first sub step of insertion of the piles (7) through the sleeves and into the seabed (Sb), and,
- a second sub step of fixation of the sleeves onto the piles (7).
